# EUROPEAN PATENT APPLICATION

(11) **EP 4 697 648 A1**
(43) Date of publication of application: **18.02.2026**
(21) Application number: 24194666.4
(22) Date of filing: 14.08.2024
(51) Int. Cl.: H04L 9/40

(54) **PROGRAMMING DEVICE-SPECIFIC SECURITY RULES INTO NETWORK DEVICES**

(71) Applicant: Nokia Solutions and Networks Oy, 02610 Espoo (FI)
(72) Inventor: LABOVITZ, Craig, Ann Arbor, 48103 (US); CARMICHAEL, Luke, Ann Arbor, 48105 (US); TENCHOV, Kaloyan, Ann Arbor, 48104-1757 (US); WELCH, Alexander, Ann Arbor, 48103 (US); KELLY, Ian, Ann Arbor, 48103 (US); MEINDERS, Stefan, 22397 Hamburg (DE); OULD-BRAHIM, Hamid, New York, 10069 (US)
(74) Representative: Bryers Intellectual Property Ltd

(57) **Abstract**

Various example embodiments for supporting network security for a communication network are presented herein. Various example embodiments for supporting network security for a communication network may be configured to support programming of security functions, including security rules, into network devices. Various example embodiments for supporting programming of security functions into network devices may be configured to support programming of security functions into high performance application-specific integrated circuits (ASICs) of the network device. Various example embodiments for supporting programming of security functions into network devices may be configured to support programming of security functions into various types of network device, such as routers, switches, servers, or the like.

## Description

### TECHNICAL FIELD

Various example embodiments relate generally to communication systems and, more particularly but not exclusively, to providing security for communication networks in communication systems.

### BACKGROUND

In communication networks, various communications technologies may be used to support various types of communications.

### SUMMARY

In at least some example embodiments, an apparatus includes at least one processor and at least one memory storing instructions that, when executed by the at least one processor, cause the apparatus at least to receive, for a communication network including a network device, a security rule that is based on a set of security policies, security attack sample information, and Internet information, receive, for the network device, network device information that includes network device configuration information indicative of a configuration of the network device and network telemetry data of the network device, generate, based on compiling of the security rule based on the network device information, a device-specific security rule for the network device, wherein the device-specific security rule is based on a programming language, and send the device-specific security rule toward the network device. In at least some example embodiments, the security rule is related to at least one of a distributed denial-of-service (DDoS) attack or a botnet attack. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the instructions, when executed by the at least one processor, cause the apparatus at least to receive the set of security policies, the security attack sample information, and the Internet information and generate the security rule based on the set of security policies, the security attack sample information, and the Internet information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, to generate the device-specific security rule, the instructions, when executed by the at least one processor, cause the apparatus at least to solve a constraint satisfaction problem that includes a set of inputs, wherein the set of inputs includes at least one of the set of security policies, the network device information, a security goal associated with the security rule, or a configuration limit. In at least some example embodiments, to generate the device-specific security rule, the instructions, when executed by the at least one processor, cause the apparatus at least to compile the security rule taking into account at least a portion of the network device information. In at least some example embodiments, the network device configuration information includes a hardware capability of the network device, wherein the device-specific security rule is generated based on the hardware capability of the network device. In at least some example embodiments, the device-specific security rule is generated in a manner tending to minimize resource consumption at the network device. In at least some example embodiments, the device-specific security rule is specified in a format supported by the network device as indicated in the network device configuration information. In at least some example embodiments, the device-specific security rule is related to at least one of a distributed denial-of-service (DDoS) attack or a botnet attack. In at least some example embodiments, the feedback information includes network telemetry data of the network device for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the instructions, when executed by the at least one processor, cause the apparatus at least to receive feedback information associated with application of the device-specific security rule at the network device, generate, based on compiling of the security rule based on the feedback information, a second device-specific security rule for the network device, and send the second device-specific security rule toward the network device. In at least some example embodiments, to generate the second device-specific security rule, the instructions, when executed by the at least one processor, cause the apparatus at least to determine, based on the feedback information, an efficacy of the device-specific security rule at the network device and generate, in response to a determination that the efficacy of the device-specific security rule at the network device fails to satisfy a threshold, the second device-specific security rule. In at least some example embodiments, to generate the second device-specific security rule, the instructions, when executed by the at least one processor, cause the apparatus at least to compile the security rule taking into account at least a portion of the feedback information. In at least some example embodiments, the second device-specific security rule is a modified version of the device-specific rule or the second device-specific security rule is a new security rule.

In at least some example embodiments, a non-transitory computer readable medium includes computer program instructions that, when executed by an apparatus, cause the apparatus at least to receive, for a communication network including a network device, a security rule that is based on a set of security policies, security attack sample information, and Internet information, receive, for the network device, network device information that includes network device configuration information indicative of a configuration of the network device and network telemetry data of the network device, generate, based on compiling of the security rule based on the network device information, a device-specific security rule for the network device, wherein the device-specific security rule is based on a programming language, and send the device-specific security rule toward the network device. In at least some example embodiments, the security rule is related to at least one of a distributed denial-of-service (DDoS) attack or a botnet attack. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the computer program instructions, when executed by the apparatus, cause the apparatus at least to receive the set of security policies, the security attack sample information, and the Internet information and generate the security rule based on the set of security policies, the security attack sample information, and the Internet information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, to generate the device-specific security rule, the computer program instructions, when executed by the apparatus, cause the apparatus at least to solve a constraint satisfaction problem that includes a set of inputs, wherein the set of inputs includes at least one of the set of security policies, the network device information, a security goal associated with the security rule, or a configuration limit. In at least some example embodiments, to generate the device-specific security rule, the computer program instructions, when executed by the apparatus, cause the apparatus at least to compile the security rule taking into account at least a portion of the network device information. In at least some example embodiments, the network device configuration information includes a hardware capability of the network device, wherein the device-specific security rule is generated based on the hardware capability of the network device. In at least some example embodiments, the device-specific security rule is generated in a manner tending to minimize resource consumption at the network device. In at least some example embodiments, the device-specific security rule is specified in a format supported by the network device as indicated in the network device configuration information. In at least some example embodiments, the device-specific security rule is related to at least one of a distributed denial-of-service (DDoS) attack or a botnet attack. In at least some example embodiments, the feedback information includes network telemetry data of the network device for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the computer program instructions, when executed by the apparatus, cause the apparatus at least to receive feedback information associated with application of the device-specific security rule at the network device, generate, based on compiling of the security rule based on the feedback information, a second device-specific security rule for the network device, and send the second device-specific security rule toward the network device. In at least some example embodiments, to generate the second device-specific security rule, the computer program instructions, when executed by the apparatus, cause the apparatus at least to determine, based on the feedback information, an efficacy of the device-specific security rule at the network device and generate, in response to a determination that the efficacy of the device-specific security rule at the network device fails to satisfy a threshold, the second device-specific security rule. In at least some example embodiments, to generate the second device-specific security rule, the computer program instructions, when executed by the apparatus, cause the apparatus at least to compile the security rule taking into account at least a portion of the feedback information. In at least some example embodiments, the second device-specific security rule is a modified version of the device-specific rule or the second device-specific security rule is a new security rule.

In at least some example embodiments, a method includes receiving, for a communication network including a network device, a security rule that is based on a set of security policies, security attack sample information, and Internet information, receiving, for the network device, network device information that includes network device configuration information indicative of a configuration of the network device and network telemetry data of the network device, generating, based on compiling of the security rule based on the network device information, a device-specific security rule for the network device, wherein the device-specific security rule is based on a programming language, and sending the device-specific security rule toward the network device. In at least some example embodiments, the security rule is related to at least one of a distributed denial-of-service (DDoS) attack or a botnet attack. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the method includes receiving the set of security policies, the security attack sample information, and the Internet information and generating the security rule based on the set of security policies, the security attack sample information, and the Internet information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, generating the device-specific security rule includes solving a constraint satisfaction problem that includes a set of inputs, wherein the set of inputs includes at least one of the set of security policies, the network device information, a security goal associated with the security rule, or a configuration limit. In at least some example embodiments, generating the device-specific security rule includes compiling the security rule taking into account at least a portion of the network device information. In at least some example embodiments, the network device configuration information includes a hardware capability of the network device, wherein the device-specific security rule is generated based on the hardware capability of the network device. In at least some example embodiments, the device-specific security rule is generated in a manner tending to minimize resource consumption at the network device. In at least some example embodiments, the device-specific security rule is specified in a format supported by the network device as indicated in the network device configuration information. In at least some example embodiments, the device-specific security rule is related to at least one of a distributed denial-of-service (DDoS) attack or a botnet attack. In at least some example embodiments, the feedback information includes network telemetry data of the network device for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the method includes receiving feedback information associated with application of the device-specific security rule at the network device, generating, based on compiling of the security rule based on the feedback information, a second device-specific security rule for the network device, and sending the second device-specific security rule toward the network device. In at least some example embodiments, generating the second device-specific security rule includes determining, based on the feedback information, an efficacy of the device-specific security rule at the network device and generating, in response to a determination that the efficacy of the device-specific security rule at the network device fails to satisfy a threshold, the second device-specific security rule. In at least some example embodiments, generating the second device-specific security rule includes compiling the security rule taking into account at least a portion of the feedback information. In at least some example embodiments, the second device-specific security rule is a modified version of the device-specific rule or the second device-specific security rule is a new security rule.

In at least some example embodiments, an apparatus includes means for receiving, for a communication network including a network device, a security rule that is based on a set of security policies, security attack sample information, and Internet information, means for receiving, for the network device, network device information that includes network device configuration information indicative of a configuration of the network device and network telemetry data of the network device, means for generating, based on compiling of the security rule based on the network device information, a device-specific security rule for the network device, wherein the device-specific security rule is based on a programming language, and means for sending the device-specific security rule toward the network device. In at least some example embodiments, the security rule is related to at least one of a distributed denial-of-service (DDoS) attack or a botnet attack. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the method includes receiving the set of security policies, the security attack sample information, and the Internet information and generating the security rule based on the set of security policies, the security attack sample information, and the Internet information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the means for generating the device-specific security rule includes means for solving a constraint satisfaction problem that includes a set of inputs, wherein the set of inputs includes at least one of the set of security policies, the network device information, a security goal associated with the security rule, or a configuration limit. In at least some example embodiments, the means for generating the device-specific security rule includes means for compiling the security rule taking into account at least a portion of the network device information. In at least some example embodiments, the network device configuration information includes a hardware capability of the network device, wherein the device-specific security rule is generated based on the hardware capability of the network device. In at least some example embodiments, the device-specific security rule is generated in a manner tending to minimize resource consumption at the network device. In at least some example embodiments, the device-specific security rule is specified in a format supported by the network device as indicated in the network device configuration information. In at least some example embodiments, the device-specific security rule is related to at least one of a distributed denial-of-service (DDoS) attack or a botnet attack. In at least some example embodiments, the feedback information includes network telemetry data of the network device for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the apparatus includes means for receiving feedback information associated with application of the device-specific security rule at the network device, means for generating, based on compiling of the security rule based on the feedback information, a second device-specific security rule for the network device, and means for sending the second device-specific security rule toward the network device. In at least some example embodiments, the means for generating the second device-specific security rule includes means for determining, based on the feedback information, an efficacy of the device-specific security rule at the network device and means for generating, in response to a determination that the efficacy of the device-specific security rule at the network device fails to satisfy a threshold, the second device-specific security rule. In at least some example embodiments, the means for generating the second device-specific security rule includes means for compiling the security rule taking into account at least a portion of the feedback information. In at least some example embodiments, the second device-specific security rule is a modified version of the device-specific rule or the second device-specific security rule is a new security rule.

In at least some example embodiments, an apparatus includes at least one processor and at least one memory storing instructions that, when executed by the at least one processor, cause the apparatus at least to send, by a network device, network device information that includes network device configuration information indicative of a configuration of the network device and network telemetry data of the network device, receive, by the network device, a first device-specific security rule configured based on the network device information, wherein the first device-specific security rule is based on a programming language, perform, by the network device, an application of the first device-specific security rule at the network device, send, by the network device based on application of the first device-specific security rule at the network device, feedback information associated with the application of the first device-specific security rule at the network device, receive, by the network device, a second device-specific security rule configured based on the feedback information, and perform, by the network device, an application of the second device-specific security rule at the network device. In at least some example embodiments, at least one of the first device-specific security rule or the second device-specific security rule is based on a security rule. In at least some example embodiments, the security rule is related to at least one of a distributed denial-of-service (DDoS) attack or a botnet attack. In at least some example embodiments, the security rule is based on at least one of a set of security policies, security attack sample information, and Internet information. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the network device configuration information includes a hardware capability of the network device, wherein the device-specific security rule is generated based on the hardware capability of the network device. In at least some example embodiments, the first device-specific security rule and the second device-specific security rule are specified in a format supported by the network device as indicated in the network device configuration information. In at least some example embodiments, at least one of the first device-specific security rule or the second device-specific security rule is related to at least one of a distributed denial-of-service (DDoS) attack or a botnet attack. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the second device-specific security rule is a modified version of the first device-specific rule or the second device-specific security rule is a new security rule.

In at least some example embodiments, a non-transitory computer readable medium includes computer program instructions that, when executed by an apparatus, cause the apparatus at least to send, by a network device, network device information that includes network device configuration information indicative of a configuration of the network device and network telemetry data of the network device, receive, by the network device, a first device-specific security rule configured based on the network device information, wherein the first device-specific security rule is based on a programming language, perform, by the network device, an application of the first device-specific security rule at the network device, send, by the network device based on application of the first device-specific security rule at the network device, feedback information associated with the application of the first device-specific security rule at the network device, receive, by the network device, a second device-specific security rule configured based on the feedback information, and perform, by the network device, an application of the second device-specific security rule at the network device. In at least some example embodiments, at least one of the first device-specific security rule or the second device-specific security rule is based on a security rule. In at least some example embodiments, the security rule is related to at least one of a distributed denial-of-service (DDoS) attack or a botnet attack. In at least some example embodiments, the security rule is based on at least one of a set of security policies, security attack sample information, and Internet information. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the network device configuration information includes a hardware capability of the network device, wherein the device-specific security rule is generated based on the hardware capability of the network device. In at least some example embodiments, the first device-specific security rule and the second device-specific security rule are specified in a format supported by the network device as indicated in the network device configuration information. In at least some example embodiments, at least one of the first device-specific security rule or the second device-specific security rule is related to at least one of a distributed denial-of-service (DDoS) attack or a botnet attack. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the second device-specific security rule is a modified version of the first device-specific rule or the second device-specific security rule is a new security rule.

In at least some example embodiments, a method includes sending, by a network device, network device information that includes network device configuration information indicative of a configuration of the network device and network telemetry data of the network device, receiving, by the network device, a first device-specific security rule configured based on the network device information, wherein the first device-specific security rule is based on a programming language, performing, by the network device, an application of the first device-specific security rule at the network device, sending, by the network device based on application of the first device-specific security rule at the network device, feedback information associated with the application of the first device-specific security rule at the network device, receiving, by the network device, a second device-specific security rule configured based on the feedback information, and performing, by the network device, an application of the second device-specific security rule at the network device. In at least some example embodiments, at least one of the first device-specific security rule or the second device-specific security rule is based on a security rule. In at least some example embodiments, the security rule is related to at least one of a distributed denial-of-service (DDoS) attack or a botnet attack. In at least some example embodiments, the security rule is based on at least one of a set of security policies, security attack sample information, and Internet information. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the network device configuration information includes a hardware capability of the network device, wherein the device-specific security rule is generated based on the hardware capability of the network device. In at least some example embodiments, the first device-specific security rule and the second device-specific security rule are specified in a format supported by the network device as indicated in the network device configuration information. In at least some example embodiments, at least one of the first device-specific security rule or the second device-specific security rule is related to at least one of a distributed denial-of-service (DDoS) attack or a botnet attack. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the second device-specific security rule is a modified version of the first device-specific rule or the second device-specific security rule is a new security rule.

In at least some example embodiments, an apparatus includes means for sending, by a network device, network device information that includes network device configuration information indicative of a configuration of the network device and network telemetry data of the network device, means for receiving, by the network device, a first device-specific security rule configured based on the network device information, wherein the first device-specific security rule is based on a programming language, means for performing, by the network device, an application of the first device-specific security rule at the network device, means for sending, by the network device based on application of the first device-specific security rule at the network device, feedback information associated with the application of the first device-specific security rule at the network device, means for receiving, by the network device, a second device-specific security rule configured based on the feedback information, and means for performing, by the network device, an application of the second device-specific security rule at the network device. In at least some example embodiments, at least one of the first device-specific security rule or the second device-specific security rule is based on a security rule. In at least some example embodiments, the security rule is related to at least one of a distributed denial-of-service (DDoS) attack or a botnet attack. In at least some example embodiments, the security rule is based on at least one of a set of security policies, security attack sample information, and Internet information. In at least some example embodiments, the security attack sample information includes at least one of a set of security attack samples or security attack sample analysis information output based on analysis of one or more security attack samples. In at least some example embodiments, the security attack sample information is based on at least one actual distributed denial-of-service (DDoS) attack sample. In at least some example embodiments, the Internet information includes at least one of device information, topology information, or service information. In at least some example embodiments, the network device configuration information includes at least one of an indication of a vendor of the network device, an indication of at least one capability of the network device, an indication of a capacity of the network device, or an indication of at least one device-specific format supported by the network device. In at least some example embodiments, the at least one capability of the network device includes at least one of a hardware capability supported by the network device, an operating system capability supported by the network device, or a programming language capability supported by the network device. In at least some example embodiments, the indication of the capacity of the network device includes at least one of an indication of an amount of central processing unit resources available at the network device, an indication of an amount of memory resources available at the network device, or an indication of an amount of input-output resources available at the network device. In at least some example embodiments, the network telemetry data of the network device includes packet information for a set of traffic flows handled at the network device. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the network device configuration information includes a hardware capability of the network device, wherein the device-specific security rule is generated based on the hardware capability of the network device. In at least some example embodiments, the first device-specific security rule and the second device-specific security rule are specified in a format supported by the network device as indicated in the network device configuration information. In at least some example embodiments, at least one of the first device-specific security rule or the second device-specific security rule is related to at least one of a distributed denial-of-service (DDoS) attack or a botnet attack. In at least some example embodiments, the network telemetry data includes at least one of a set of mirrored packets, Internet Protocol (IP) Flow Information Export (IPFIX) data, Simple Network Management Protocol (SNMP) traps, or gRPC data. In at least some example embodiments, the second device-specific security rule is a modified version of the first device-specific rule or the second device-specific security rule is a new security rule.

In at least some example embodiments, an apparatus includes at least one processor and at least one memory storing instructions that, when executed by the at least one processor, cause the apparatus at least to receive, a security rule that is based on a programming language and that is based on at least one of a set of security policies, security attack sample information, or Internet information, receive, for a network device, network device information that includes network device configuration information indicative of a configuration of the network device and network telemetry data of the network device, generate, based on compiling of the security rule based on the programming language and based on at least a portion of the network device information, a device-specific security rule for the network device, and initiate configuration of the network device to use the device-specific security rule for the network device. In at least some example embodiments, a non-transitory computer readable medium includes computer program instructions that, when executed by an apparatus, cause the apparatus at least to receive, a security rule that is based on a programming language and that is based on at least one of a set of security policies, security attack sample information, or Internet information, receive, for a network device, network device information that includes network device configuration information indicative of a configuration of the network device and network telemetry data of the network device, generate, based on compiling of the security rule based on the programming language and based on at least a portion of the network device information, a device-specific security rule for the network device, and initiate configuration of the network device to use the device-specific security rule for the network device. In at least some example embodiments, a method includes receiving, a security rule that is based on a programming language and that is based on at least one of a set of security policies, security attack sample information, or Internet information, receiving, for a network device, network device information that includes network device configuration information indicative of a configuration of the network device and network telemetry data of the network device, generating, based on compiling of the security rule based on the programming language and based on at least a portion of the network device information, a device-specific security rule for the network device, and initiating configuration of the network device to use the device-specific security rule for the network device. In at least some example embodiments, an apparatus includes means for receiving, a security rule that is based on a programming language and that is based on at least one of a set of security policies, security attack sample information, or Internet information, means for receiving, for a network device, network device information that includes network device configuration information indicative of a configuration of the network device and network telemetry data of the network device, means for generating, based on compiling of the security rule based on the programming language and based on at least a portion of the network device information, a device-specific security rule for the network device, and means for initiating configuration of the network device to use the device-specific security rule for the network device.

### BRIEF DESCRIPTION OF THE DRAWINGS

The teachings herein can be readily understood by considering the following detailed description in conjunction with the accompanying drawings, in which:
FIG. 1 depicts an example embodiment of a communication system including a network security system configured to provide network security functions for a communication network;
FIG. 2 depicts an example embodiment of a network security system configured to provide network security functions for a communication network;
FIG. 3 depicts an example embodiment of a network device of a communication network where the network device is configured to support network security functions for the communication network under control of a network security system;
FIG. 4 depicts an example embodiment of a communication system configured to support programming of security functions into network devices of a communication network;
FIG. 5 depicts an example embodiment of a communication system configured to support programming of security functions into network devices of a communication network;
FIG. 6 depicts an example embodiment of a method for supporting programming of a security rule into a network device of a communication network;
FIG. 7 depicts an example embodiment of a method for supporting programming of a security rule into a network device of a communication network;
FIG. 8 depicts an example embodiment of a method for supporting programming of a security rule into a network device a communication network;
FIG. 9 depicts an example embodiment of a method for supporting programming of a security rule into a network device of a communication network; and
FIG. 10 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting network security for a communication network are presented herein. Various example embodiments for supporting network security for a communication network may be configured to support programming of security functions, including security rules, into network devices. Various example embodiments for supporting programming of security functions into network devices may be configured to support programming of security functions into high performance application-specific integrated circuits (ASICs) of the network devices. Various example embodiments for supporting programming of security functions into network devices may be configured to support programming of security functions into various types of network device, such as routers, switches, servers, or the like (i.e., it will be appreciated that, although primarily presented herein within the context of programming security rules into routers, various example embodiments presented herein also may be applied for programming security rules into various other types of network devices which may utilize security rules to provide security in communication networks). It will be appreciated that these and various other example embodiments and advantages or potential advantages of example embodiments for supporting network security for communication networks, including supporting programming of security functions into network devices, may be further understood by way of reference to the various figures, which are discussed further below.

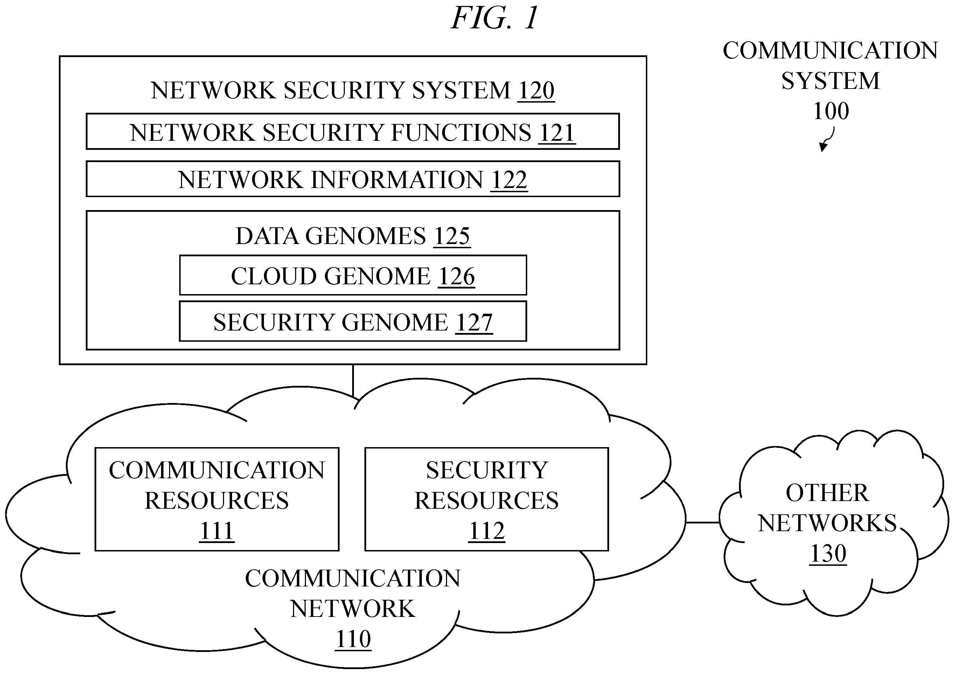

FIG. 1 depicts an example embodiment of a communication system including a network security system configured to provide network security functions for a communication network.

The communication system 100 includes a communication network 110, a network security system 120, and external networks 130. The communication network 110 may be any type of network, such as a telecommunications service provider network (e.g., a wireline network, a wireless network, or a combinations thereof), a datacenter network, an enterprise network, a content distribution network (CDN), or the like, as well as various combinations thereof. The network security system 120 is configured to support security for the communication network 110. The external networks 130 may include various types of networks with which the communication network 110 may interact for various purposes, such as telecommunications service provider networks, datacenter networks, enterprise networks, the Internet, or the like, as well as various combinations thereof. It will be appreciated that the communication system 100 may include various other elements which may be arranged in various ways.

The communication network 110 may include any type of network for which security may be provided by the network security system 120. For example, the communication network 110 may include a telecommunications service provider network, such as a wireline communications network (e.g., a telephone network, a cable network, an Internet access network, a fiber optic network, and so forth), a cellular wireless communication network (e.g., a Third Generation (3G) cellular network, a Fourth Generation (4G) cellular network, a Fifth Generation (5G) cellular network, a Sixth Generation (6G) cellular network, and so forth), or the like, as well as various combinations thereof. For example, the communication network 110 may include a datacenter network (e.g., including servers communicating via switches (e.g., top-of-rack (ToR) switches), routers, and so forth). For example, the communication network 110 may include an enterprise network. It will be appreciated that the communication network 110 may be implemented in various other ways and may include any communication network(s) for which security may be provided by the network security system 120.

The communication network 110 includes a set of communication resources 111. The communication resources 111 may be configured to support communications of the communication network 110. The communication resources 111 may include physical resources (e.g., physical appliances such as routers, switches, servers, extended services appliances, or the like) configured to support communications within the communication network 110, virtual resources (e.g., virtual machines (VMs), virtual containers (VCs), or the like) configured to support communications within the communication network 110 (e.g., based on network function virtualization (NFV) or other similar or related network virtualization capabilities that provide virtualized network functions (VNFs)), or the like, as well as various combinations thereof. The communication resources 111 may include processing resources, memory resources, storage resources, input/output resources, bandwidth resources, or the like, as well as various combinations thereof. It will be appreciated that the communication resources 111 may include various other resources which may support communications of the communication network 110.

The communication network 110 includes a set of security resources 112. The security resources 112 may be configured to support security functions that provide security for the communication network 110. The security resources 112 may include physical resources (e.g., physical appliances such as servers, firewalls, extended services appliances, or the like) configured to support security functions for the communication network 110, virtual resources (e.g., VMs, VCs, or the like) configured to support security functions for the communication network 110, or the like, as well as various combinations thereof. The security resources 112 may include processing resources, memory resources, storage resources, input/output resources, bandwidth resources, or the like, as well as various combinations thereof. It will be appreciated that the security resources 112 may include various other resources which may be used to support security for the communication network 110. It will be appreciated that, although depicted as standalone resources, at least a portion of the security resources 112 may be integrated within at least a portion of the communication resources 111 (e.g., hosted on communication devices of the communication resources 111, combined with VNFs of the communication resources 111, or the like, as well as various combinations thereof).

It will be appreciated that the communication network 110 may include various other types of resources, including various other types of resources that are configured to support communications within the communication network 110, various other types of resources that are configured to support security for the communication network 110, or the like, as well as various combinations thereof.

The network security system 120 may be configured to support various functions configured to enable the network security system 120 to provide network security functions 121 for the communication network 110. For example, the network security system 120 may be configured to support data processing capabilities which support analysis of massive quantities of data, thereby providing scalability and robustness to support network security functions for various types of communications (e.g., cloud, IoT, 5G, or the like, as well as various combinations thereof). For example, the network security system 120 may be configured to correlate large data sets associated with the communication network 110, infer hidden knowledge about the communication network 110 (including devices, services, and subscribers) based on correlation of the data sets, and make the knowledge available for investigation (e.g., based on customized queries, on-the-fly visualizations, or the like, as well as various combinations thereof), thereby providing a holistic view of the communication network 110 (e.g., including peering, transit, service flows, or the like, as well as various combinations thereof). For example, the network security system 120 may be configured to correlate real-time data collected from the communication network 110 with genome data in order to provide full insight into the manner in which the communication network delivers various services (e.g., Internet based application and content services) to end systems and end users. Here, the genome data may include information obtained by crawling or observing various devices or activities (e.g.. Internet related activities, component related data, or the like as well as various combinations thereof), information obtained based on synthesis of multiple datasets, information based on mapping functions, information obtained based on use of machine learning (ML) and/or artificial intelligence (AI) functions, or the like, as well as various combinations thereof. For example, the network security system 120 may be configured to provide various types of insight into the devices, services, and/or subscribers of the communication network 110, at various levels of granularity, thereby supporting automation of network security functions for the communication network 110. It will be appreciated that the network security system 120 may be configured to support various other functions configured to enable the network security system 120 to provide network security functions 121 for the communication network 110.

The network security system 120, as indicated above, may be configured to support the network security functions 121 for the communication network 110. For example, the network security functions may include various functions configured to support programming of security functions, including security rules, into network devices (e.g., routers, switches, servers, or the like, as well as various combinations thereof). For example, the network security functions may include various functions configured to support programming of security functions, including security rules, into high performance ASICs of the network devices. For example, the network security functions 121 may include security control functions (e.g., functions configured to control programming of security functions, including security rules, into network devices. It will be appreciated that the network security system 120 may be configured to provide various other network security functions 121 for communication network 110.

The network security system 120 may be configured to provide the network security functions 121 for the communication network 110 based on network information 122 of the communication network 110. The network security system 120 may be configured to provide the network security functions 121 for the communication network 110 based on analysis of the network information 122 of the communication network 110. The network information 122 of the communication network 110 may include various types of information related to operation of the communication network 110. For example, the network information 122 of the communication network 110 may include network information received from the communication network 110, network information received from one or more systems providing management functions for the communication network 110, or the like, as well as various combinations thereof. It will be appreciated that the network information 122 of the communication network 110 may include various other types of information related to operation of the communication network 110

The network information 122 of the communication network 110, as indicated above, may include network information received from the communication network 110. For example, the network information received from the communication network 110 may include various types of network telemetry data which may be obtained from the communication network 110. For example, the network information received from the communication network 110 may include telemetry data from network devices (e.g., routers, switches, servers, or the like) deployed in the communication network 110. For example, the network information received from the communication network 110 may include network performance data, service APIs, log events, security events, or the like, as well as various combinations thereof. For example, the network information received from the communication network 110 may include IP flow-related data sets (e.g., IPFIX flow data), Border Gateway Protocol (BGP) data, Domain Name System (DNS)-related data (e.g., DNSflow), Remote Authentication Dial-In User Service (RADIUS) / Authentication, Authorization, and Accounting (AAA) data, Simple Network Management Protocol (SNMP) data, IP Flow Information Export (IPFIX) data, GOOGLE Remote Procedure Call (gRPC)-based data, packet samples which can be full packets or subset of packet headers mirrored by the network device, or the like, as well as various combinations thereof. The network information received from the communication network 110 may include various other types of information which may be obtained from the communication network 110.

The network information 122 of the communication network 110, as indicated above, may include network information received from one or more systems providing management functions for the communication network 110 (which are omitted for purposes of clarity). For example, the network information received from one or more systems providing management functions for the communication network 110 may include various types of network-related data which may be obtained from various sources. For example, the network information received from one or more systems providing management functions for the communication network 110 may include information from one or more operations support systems (OSSs) providing operations support for the communication network 110, information from one or more business support systems (BSSs) providing business support for the communication network 110, or the like, as well as various combinations thereof. For example, the network information received from one or more systems providing management functions for the communication network 110 may include information from one or more customer care systems supporting the communication network 110, information from one or more customer support and billing systems supporting the communication network 110, information from one or more network monitoring systems supporting the communication network 110 (e.g., service provider monitoring, datacenter monitoring, enterprise monitoring, or the like), information from one or more application monitoring systems monitoring applications associated with the communication network 110, or the like, as well as various combinations thereof. The network information received from one or more systems providing management functions for the communication network 110 may include various other types of information related to the communication network 110.

It will be appreciated that the network security system 120 may be configured to provide the network security functions 121 for the communication network 110 based on use of various other types of information related to the communication network 110.

The network security system 120 may be configured to provide the network security functions 121 for the communication network 110 based on use of one or more data genomes 125. The network security system 120 may be configured to provide the network security functions 121 for the communication network 110 based on analysis performed using the one or more data genomes 125. The one or more data genomes 125 may include various types of genomes which may be used to support security for the communication network 110. For example, the one or more data genomes may include a cloud genome 126, a security genome 127, or the like, as well as various combinations thereof. The network security system 120 may be configured to provide various genome development and use functions for developing the one or more data genomes 125 and using the one or more data genomes 125 to support security for the communication network 110. It will be appreciated that the network security system 120 may be configured to provide the network security functions 121 for the communication network 110 based on use of various other types of data genomes.

The network security system 120 may be configured to provide at least a portion of the network security functions 121 for the communication network 110 based on use of the cloud genome 126. The cloud genome 126 may be configured to provide detailed Internet service delivery chain information. The cloud genome 126 may be configured to track, map, and analyze billions of Internet endpoints to provide a dynamic supply map of the Internet. The cloud genome 126 may be configured to provide full visibility into the manner in which applications and content are delivered from various sources across the Internet to the communication network 110 and across the communication network 110 to the subscribers. It will be appreciated that the cloud genome 126 may include various other types of information, may be applied for supporting various other network security functions, or the like, as well as various combinations thereof.

The network security system 120 may be configured to provide at least a portion of the network security functions 121 for the communication network 110 based on use of the security genome 127. The security genome 127 may be configured to provide detailed Internet security context information. The security genome 127 may be configured to operate as a cloud-based, up-to-date data feed that tracks the security context of the Internet. The security genome 127 may be configured to provide detailed visibility into billions of IPv4 and IPv6 addresses, tracking Internet traffic over numerous categories and deploying an extensive set of ML rules for automatic classification and precise allocation of applications and flows into security-related traffic types and categories. The security genome 127 may be configured such that it "knows" intricate security details of the Internet (e.g., details about prior security attacks, insecure servers, compromised IoT devices that can be used for security attacks, or the like, as well as various combinations thereof). The security genome 127 may be configured to provide a unique knowledge base that includes prior history of global security activity, current information about Internet-related security (e.g., potential security threats, secure and insecure Internet sources, secure and insecure Internet destinations, secure and insecure traffic patterns, or the like), or the like, as well as various combinations thereof. The security genome 127 may include information for various types of security attacks, such as distributed denial-of-service (DDoS) attacks, botnet attacks, or the like, as well as various combinations thereof. It will be appreciated that the cloud genome 127 may include various other types of information, may be applied for supporting various other network security functions, or the like, as well as various combinations thereof.

It will be appreciated that the network security system 120 may be configured to provide ones of the network security functions 121 for the communication network 110 based on use of various other genomes which may be constructed to provide ones of the network security functions 121 for the communication network 110.

The network security system 120 may be configured to provide the network security functions 121 for the communication network 110 based on analysis of the network information 122 of the communication network 110 using the one or more data genomes 125. The use of the one or more data genomes 125 to analyze the network information 122 of the communication network 110 provides deep and unique insights into various aspects of the communication network 110 (e.g., devices, services, customers, transit, peering, content consumption, or the like, as well as various combinations thereof). The network security system 120 may be configured to analyze the network information 122 of the communication network 110 based on the one or more data genomes 125 to provide network security functions such as security control functions as well as one or more additional functions which may be used to support the security control functions (e.g., operational intelligence functions, cloud intelligence functions, subscriber intelligence functions, video analytics functions, or the like, as well as various combinations thereof).

The network security system 120 may be deployed in various ways. For example, the network security system 120 may be deployed as one or more devices deployed within the communication network 110 for which security is provided, as one or more devices deployed outside of the communication network 110 for which security is provided, or the like, as well as various combinations thereof. For example, the network security system 120 may be deployed within a cloud that is communicatively connected to the communication network 110 for which security is provided (e.g., using software-as-a-service or other suitable cloud-based deployments). It will be appreciated that the network security system 120 may be deployed using various combinations of such deployment techniques. It will be appreciate that the network security system 120 may be deployed in various other ways.

It will be appreciated that the communication system 100 may include various other elements (e.g., devices, resources, or the like, as well as various combinations thereof) related to providing security for the communication network 110 by the network security system 120.

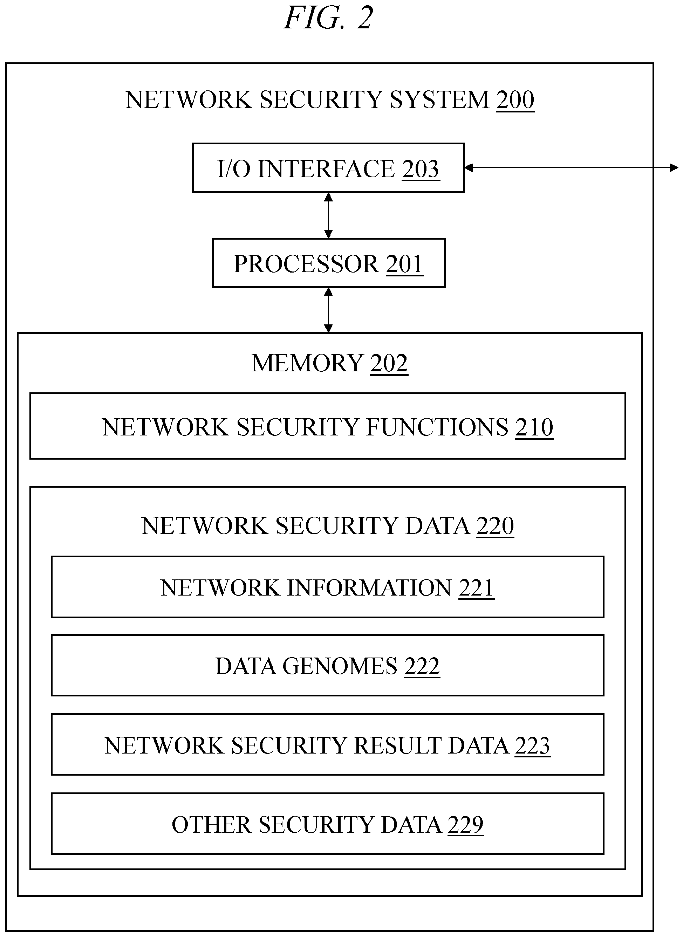

FIG. 2 depicts an example embodiment of a network security system configured to provide network security functions for a communication network.

The network security system 200 is configured to support various network security functions for a communication network. For example, the network security system 200 may be used as the network security system 120 of the communication system 100 of FIG. 1. The network security system 200 includes a processor 201, a memory 202, and an input/output (I/O) interface 203. The processor 201 is communicatively connected to the memory 202 and the I/O interface 203. The processor 201 is configured to perform various types of processing, in cooperation with the memory 202 and the I/O interface 203, for enabling the network security system 200 to provide network security functions for a communication network. The memory 202 stores network security functions 210 and network security data 220. The network security functions 210 may include various functions related to supporting security for a communication network.

The security control functions 211 may be configured to provide various network security functions for a communication network. The security control functions 211 may be configured to support detection and mitigation of security attacks. The security control functions 211 may be configured to support detection and mitigation of various types of security attacks, including distributed denial-of-service (DDoS) attacks, botnet attacks, or the like, as well as various combinations thereof. The security control functions 211 may be configured to use real-time analytics with intelligence to monitor a communication network in order to recognize and stop security attacks, including inbound attacks against the communication network (e.g., external attacks launched from the Internet toward the communication network) and outbound attacks based on the communication network (e.g., internal attacks from hijacked or malicious devices within the communication network). The security control functions 211 may include security detection and mitigation functions, including DDoS detection and mitigation functions for detecting and mitigating DDoS attacks, botnet detection and mitigation functions for detecting and mitigating botnet attacks, or the like, as well as various combinations thereof. It will be appreciated that the security control functions 211 may include various other types of network security functions which may be provided for a communication network.

The security detection and mitigation functions may be configured to provide a robust and comprehensive attack protection scheme that is able to protect against various types of attack traffic (e.g., DDoS traffic, botnet traffic, or the like, as well as various combinations thereof). The security detection and mitigation functions may be configured to provide efficient and scalable network-based security protection. The security detection and mitigation functions may be configured to make the communication network immune to security threats by combining and automating security monitoring and detection with network-based protection and auto-mitigation. The security detection and mitigation functions may be configured to provide a robust and comprehensive attack protection scheme based on various combinations of detection capabilities and advanced packet processing features of high-performance network devices. The security detection and mitigation functions may be configured to create extended protection for various infrastructure elements, systems, subscribers, users, or the like, as well as various combinations thereof. The security detection and mitigation functions may be configured to provide additional flexibility for protection based on use of protection groups that can be used to prioritize various groups of infrastructure elements, systems, subscribers, users, or the like, as well as various combinations thereof. The security detection and mitigation functions may be configured to detect and stop attack traffic before the attack traffic can impact services or customers. The security detection and mitigation functions may be configured to leverage the rich telemetry and programmability of the IP network to provide improved detection with full traffic visibility and improved scalability to deliver holistic network security.

The security detection and mitigation functions may be configured to provide real-time attack detection while also orchestrating a variety of attack mitigation options. The security detection and mitigation functions may be configured to detect threat patterns in real time (e.g., based on an Internet security context and network-wide perspective of traffic, including unusual patterns or disproportionate traffic volumes for specific traffic types). The security detection and mitigation functions may be configured to dynamically detect new types of attacks as the attacks evolve over time. The security detection and mitigation functions may be configured to combine network information (e.g., telemetry, DNS, BGP, or the like, as well as various combinations thereof) and genome data (e.g., security genome data) to provide big data IP analytics in a manner that supports attack detection and mitigation. The security detection and mitigation functions may be configured to correlate the network information and security genome data to rapidly and accurately drive agile network-based attack mitigation using IP routers or security device resources. The security detection and mitigation functions may be configured to apply advanced AI/MI, algorithms to calculate optimal mitigation strategies for particular attacks or combinations of attacks and initiate the optimal mitigation strategies in real time to neutralize the attacks. The security detection and mitigation functions may be configured to drop, isolate, and remove attack traffic without impacting legitimate traffic. The security detection and mitigation functions may be configured to automate various aspects of attack protection, including providing optimized auto-mitigation so that attacks can be mitigated automatically and supporting extensive reporting and customization options that allow for optimization, streamlining, and automation of security workflows.

It will be appreciated that the security control functions 211 may be configured to support various other capabilities for providing security for a communication network.

The network security data 220, as indicated above, may include network information 221, data genomes 222, network security result data 223, and other security data 229. The network information 221 may correspond to the network information 122 of the network management system 120 of FIG. 1 and, thus, may include various types of information associated with the communication network being managed by the network management system 200. The data genomes 222 may correspond to the data genomes 125 of the network management system 120 of FIG. 1 and, thus, may include various types of information which may be used for supporting management of the communication network by the network management system 200 (e.g., a cloud genome, a security genome, or the like, as well as various combinations thereof). The network security result data 223 may include any data generated in conjunction with providing security for a communication network by the network management system 200 (e.g., input information, analysis results information, insights, control data supporting control of elements for supporting network security, feedback information received from network devices providing network security based on device-specific security rules, or the like, as well as various combinations thereof). The other security data 229 may include various other types of data which may be used for and/or generated in conjunction providing security for a communication network by the network security system 200. It will be appreciated that the network security data 220 may include various other types of data which may be used for and/or generated in conjunction with providing security for a communication network by the network security system 200. It will be appreciated that, although primarily presented with respect to example embodiments in which the network security data 220 is maintained within the memory 202, at least a portion of the network security data 220 also or alternatively may be maintained using one or more other elements (e.g., remotely located memories, internal or external storage elements, internal or external databases, or the like, as well as various combinations thereof).

It will be appreciated that the network security system 200 may include various other elements, may be configured to support various other types of network security functions, or the like, as well as various combinations thereof.

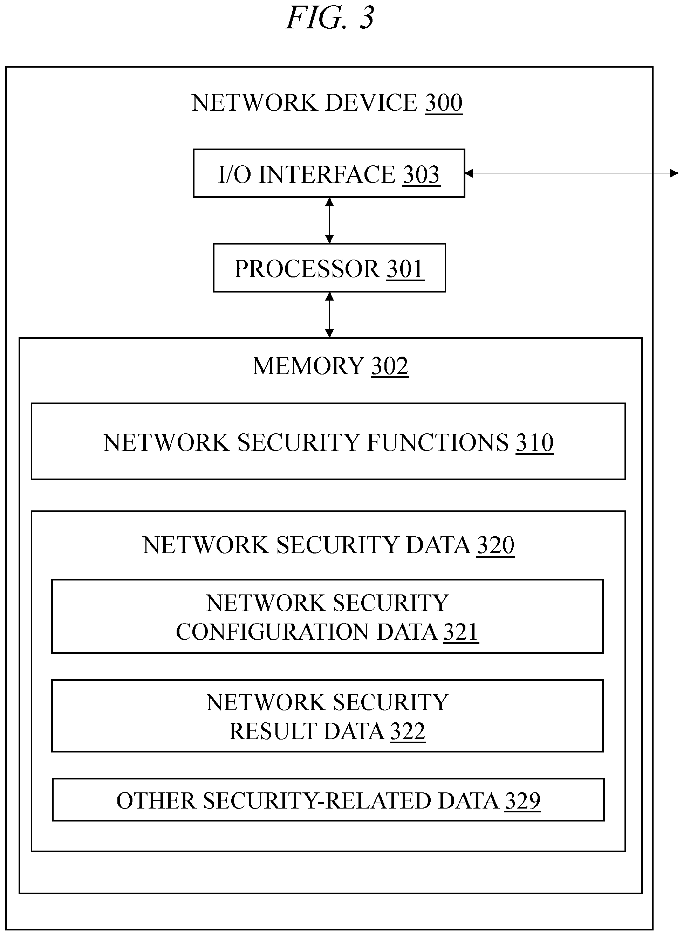

FIG. 3 depicts an example embodiment of a network device of a communication network where the network device is configured to support network security functions for the communication network under control of a network security system.

The network device 300 may be any network device that is deployed within the communication network for which a network security system is providing network security and that is configured to support network security functions for providing network security for the communication network under the control of the network security system. For example, the network device 300 may be a network communication device configured to support communication within the communication network while also supporting network security functions, a network security element dedicated to supporting network security functions for the communication network, or the like, as well as various combinations thereof. For example, the network device 300 may be a router, a switch, a gateway, a firewall, an extended services appliance, or the like, as well as various combinations thereof. For example, the network device 300 may be used as a network device of the communication network 110 of the communication system 100 of FIG. 1. It will be appreciated that the network device 300 may include various other types of devices or elements configured to be deployed within the communication network for which a network security system is providing network security and that is configured to support network security functions for providing network security for the communication network under the control of the network security system.

The network device 300 includes a processor 301, a memory 302, and an input/output (I/O) interface 303. The processor 301 is communicatively connected to the memory 302 and the I/O interface 303. The processor 301 is configured to perform various types of processing, in cooperation with the memory 302 and the I/O interface 303, for enabling the network device 300 to provide network security functions for a communication network. The memory 302 stores network security functions 310 and network security data 320. The network security functions 310 may include various network security functions related to providing security for a communication network. The network security data 320 may include various types of data related to providing security for a communication network, including network security configuration data 321 related to configuration of the network device 300 to support the network security functions, network security result data 322 obtained based on application of the network security functions by the network device 300 (e.g., feedback information received from the network device 300 after application of the network security functions by the network device 300, results information determined based on analysis of the application of the network security functions by the network device 300 (e.g., types of traffic dropped and/or passed as the system applies and refines security rules, quantities of traffic dropped and/or passed as the system applies and refines security rules, or the like, as well as various combinations thereof), or the like, as well as various combinations thereof), and other security-related data 329. The processor 301 may be configured to access the network security functions 310 and the network security data 320 from the memory 302 and execute the network security functions 310 based on portions of the network security data 320 for providing security for a communication network. It will be appreciated that the processor 301, the memory 302, and the I/O interface 303 may be configured to support various other functions for enabling the network device 300 to support network security functions for a communication network under the control of a network security system for the communication network.

It will be appreciated that the network device 300 may include various other elements, may be configured to support various other types of network security functions, or the like, as well as various combinations thereof.

Various example embodiments may be configured to support automatic learning of security functions network devices and automatic programming of the learned security functions into the network devices, including into high performance ASICs of network devices. The security functions may include relatively simple security functions (e.g., simple blocking filters, such as for blocking traffic based on IP address, port, and/or protocol) and/or more complex security functions (e.g., blocking DDoS attacks or botnet attacks, discovering and filtering malicious payloads, or the like, as well as various combinations thereof). The security functions may be specified in the form of security rules to be applied for providing the security functions. It will be appreciated that supporting such automatic learning and programming of the security functions, including complex security functions, for the network devices will enable the network devices to support the security functions while obviating the need for use of specialized hardware (e.g., custom field programmable gate array (FPGA) / Deep-Learning Processor Unit (DPU) hardware) in order to support more complex security functions for the network devices (although it will be appreciated that, in at least some cases, such specialized hardware may still be deployed for various complementary and/or supplementary purposes).

Various example embodiments may be configured to program security functions, including simple security functions as well as complex security functions, into network devices. Various example embodiments may be configured to program security functions into a diverse set of network devices of a communication network (e.g., different types of network devices, network devices from different vendors, network devices supporting different capabilities, network devices having different configurations, network devices having different capacities, or the like, as well as various combinations thereof). Various example embodiments may be configured to program security functions into ASICs of network devices, including into high performance ASICs of network devices. Various example embodiments may be configured to program security functions into network devices in a manner that achieves security performance (e.g., based on false positive rate, false negative rate, latency, and other metrics) that is equal to or even better than traditional FPGA / DPU based security appliances, thereby obviating the need for deployment of such traditional FPGA / DPU based security appliances to provide security for the communication network (although it will be appreciated that at least some such traditional FPGA / DPU based security appliances also may be used for various purposes).

Various example embodiments may be configured to support dynamic programming of security functions into network devices based on use of dynamic programming capabilities configured to continuously solve a constraint satisfaction / optimization problem. Various example embodiments may be configured to support dynamic programming of security functions into network devices based on use of dynamic programming capabilities configured to continuously solve a constraint satisfaction / optimization problem across multiple inputs that include security goals to be achieved (e.g., block DDoS, block botnet, or the like), network device configuration information (e.g., network device types, network device model, network device hardware capabilities, network device operating system (OS) capabilities, network device programming language capabilities (e.g., NetConf versus FlowSpec or the like), network device capacity (e.g., available CPU, filter memory, or the like), or the like), network telemetry data (e.g., mirror packets, IPFIX, or the like), other inputs (e.g., user-specified policies, configuration limits, or the like), or the like, as well as various combinations thereof. Various example embodiments may be configured to support dynamic programming of security functions into network devices based on use of various other dynamic programming capabilities.

Various example embodiments may be configured to support dynamic programming of security functions into network devices based on use of various automatic learning capabilities and automatic optimization capabilities. Various example embodiments may be configured to leverage security attack sample information based on a global library of security attack samples to train a security learning / optimization engine automatically while continuously being updated with real-world attacks, thereby achieving a high level of automatic learning and automatic training based on various machine learning capabilities. Various example embodiments may be configured to provide a continuous automatic loop that supports auto-learning and auto-optimization of security attack detection and mitigation strategies to accommodate a communication network of dynamic network devices (e.g., a diverse set of network devices that may dynamically change over time) depending on the nature and scale of the security attacks. Various example embodiments may be configured to support dynamic programming of security functions into network devices based on use of various other automatic learning capabilities and/or automatic optimization capabilities.

Various example embodiments may be configured to support dynamic programming of security functions into network devices based on use of a high-level language configured to support various aspects of programming of security functions into network devices. The high-level language may be hardware agnostic when describing security functions and network-wide security processing logic, thereby enabling specification of an optimal, multi-vendor solution both for individual network devices and for the communication network as a whole (across a diverse set of heterogeneous network devices). The high-level language may be configured to support specification of security rules in a declarative or descriptive language (e.g.: "If protocol type is 6 and source port is less than 1024 and port_range_analysis is positive for TCP flooding then consider this attack as TCP attack."). The high-level language may be configured to support compiling of security rules between languages or language versions (e.g., target language / version may or may not be device-specific, target language can be in abstract form, or the like). The high-level language may be configured to support different levels of training/optimization, including directly or indirectly supporting a wide range of network devices (where indirectly may be based on use of servers which may format the appropriate device language/protocol supported, may be based on device-agnostic optimization, or the like). The high-level language may be configured to support real-time feeding of security rules to a training/learning engine, implementation of security rules on software and/or hardware, or the like, as well as various combinations thereof. The high-level language may be configured to support various other aspects of example embodiments for supporting dynamic programming of security functions into network devices.

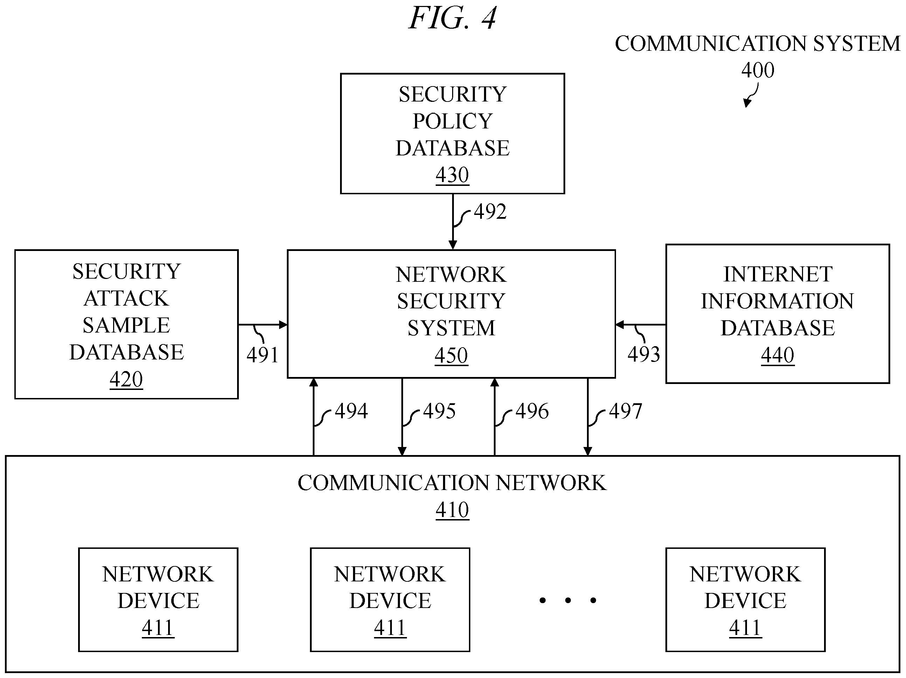

It will be appreciated these example embodiments for supporting dynamic programming of security functions into network devices, as well as various other example embodiments for supporting dynamic programming of security functions into network devices, may be further understood by considering various aspects of a communication system configured to support programming of security functions into network devices of a communication network, as presented with respect to FIG. 4.

FIG. 4 depicts an example embodiment of a communication system configured to support programming of security functions into network devices of a communication network.

As depicted in FIG. 4, communication system 400 includes a communication network 410, a security attack sample database 420, a security policies database 430, an Internet information database 440, and a network security system 450.

The communication network 410 includes various network devices 411, including network devices which may be configured by the network security system 450 to provide network security for the communication network 410 (e.g., based on programming of security functions into network devices of the communication network 410). For example, the communication network 410 may include network devices such as routers, switches, servers, or the like, as well as various combinations thereof.

The security attack sample database 420 maintains security attack samples which may be used by the network security system 450 for determining device-specific security rules for network devices 411 of the communication network 410 and programming the device-specific security rules onto the network devices 411 of the communication network 410 for providing security for the communication network 410. The security attack sample database 420 may receive continuous updates of real-world security attack samples (e.g., DDoS attack samples, botnet attack samples, or the like, as well as various combinations thereof) from various sources of such real-world security attack samples (e.g., network providers, service providers, cloud providers, regulators, national security organizations, security companies, security professionals, or the like, as well as various combinations thereof). The security attack samples are samples of security attacks which have occurred and each security attack sample may include security attack information describing the security attack (e.g., attack type of the attack, date and time of the attack, location of the attack, one or more characteristics of the attack, resolution of the attack, or the like, as well as various combinations thereof). The security attack sample database 420 also or alternatively may include security attack sample information which may include security attack samples, information from security attack samples, information derived from analysis of security attack samples, or the like, as well as various combinations thereof. The security attack sample database 420 may correspond to the security genome 127 of the communication system 100 of FIG. 1.

The security policies database 430 maintains security policies which may be used by the network security system 450 for determining device-specific security rules for network devices 411 of the communication network 410 and programming the device-specific security rules onto the network devices 411 of the communication network 410 for providing security for the communication network 410. The security policies database 430 may maintain security policies composed of high-level security rules. The high-level security rules are generic security rules, not device-specific security rules. The high-level security rules may include security rules generated by human security engineers. The high-level security rules may specify security goals to be achieved, one or more parameters which may be used for detection of a security attack, one or more actions which may be initiated for mitigation of a security attack once detected, or the like, as well as various combinations thereof. The high-level security rules may be high-level security rules for various types of security attacks (e.g., DDoS attacks, botnet attacks, or the like, as well as various combinations thereof.

The Internet information database 440 maintains Internet information which may be used by the network security system 450 for determining device-specific security rules for network devices 411 of the communication network 410 and programming the device-specific security rules onto the network devices 411 of the communication network 410 for providing security for the communication network 410. The Internet information database 440 may maintain Internet information which describes various aspects of the Internet. For example, the Internet information may include Internet topology information, Internet device information, Internet services information, or the like, as well as various combinations thereof. The Internet information database 440 may correspond to the cloud genome 126 of the communication system 100 of FIG. 1.

The network security system 450 is configured to provide network security for communication network 410. The network security system 450 is configured to provide network security for the communication network 410 based on the attack sample database 420, the security policies database 430, and the Internet information database 440. The network security system 450 is configured to provide network security for the communication network 410 by determining device-specific security rules for network devices 411 of the communication network 410 and programming the device-specific security rules onto the network devices 411 of the communication network 410 for providing security for the communication network 410.

As depicted in FIG. 4, communication system 400 supports a process for programming of security functions into network devices 411 of the communication network 410 by the network security system 450, as indicated by the sequence of steps 491 - 497. At step 491, the network security system 450 receives security attack sample information from the security attack sample database 420. At step 492, the network security system 450 receives security policies from the security policies database 430. At step 493, the network security system 450 receives Internet information from the Internet information database 440. At step 494, the network security system 450 receives network information from the communication network. For example, the network information may include network device configuration information (e.g., vendor, model, capabilities (e.g., hardware capabilities, software capabilities, or the like), capacity, or the like, as well as various combinations thereof), device telemetry, or the like, as well as various combinations thereof. At step 495, the network security system 450 configures one or more network devices 411 of the communication network 410 with device-specific security rules. The network security system 450 determines the device-specific security rules based on the attack samples, the security policies, the Internet information, and the network information. The network security system 450 compiles the device-specific security rules and programs the one or more network devices 411 with the device-specific security rules. At step 496, the network security system 450 receives updated network information from the communication network 410 based on application of the device-specific security rules by the one or more network devices 411 of the communication network 410. At step 497, the network security system 450 configures one or more network devices 411 of the communication network 410 with updated device-specific security rules determined based on the updated network information from the communication network 410 (and possibly also based on one or more of existing or new attack samples, existing or new security policies, and/or existing or new Internet information). The one or more network devices that are configured in step 497 may be the same one or more network devices 411 as those configured in step 495 and/or may include one or more different network devices 411 than those configured in step 495. It will be appreciated that the steps may be performed in a manner for supporting automated optimization of the security functions supported by the network devices 411 as new information becomes available (e.g., based on new attack samples, newly defined security policies, new Internet information, real-time feedback from the network devices 411, or the like, as well as various combinations thereof), thereby continuously optimizing the security capabilities of the communication network 410 as the security situation evolves over time.

It will be appreciated that programming of network devices of the communication network 410 to provide security for the communication network 410, although primarily presented as being provided based on execution of a specific sequence of steps, may be provided based on execution of the steps in different orders, based on execution of fewer or more steps, or the like, as well as various combinations thereof.

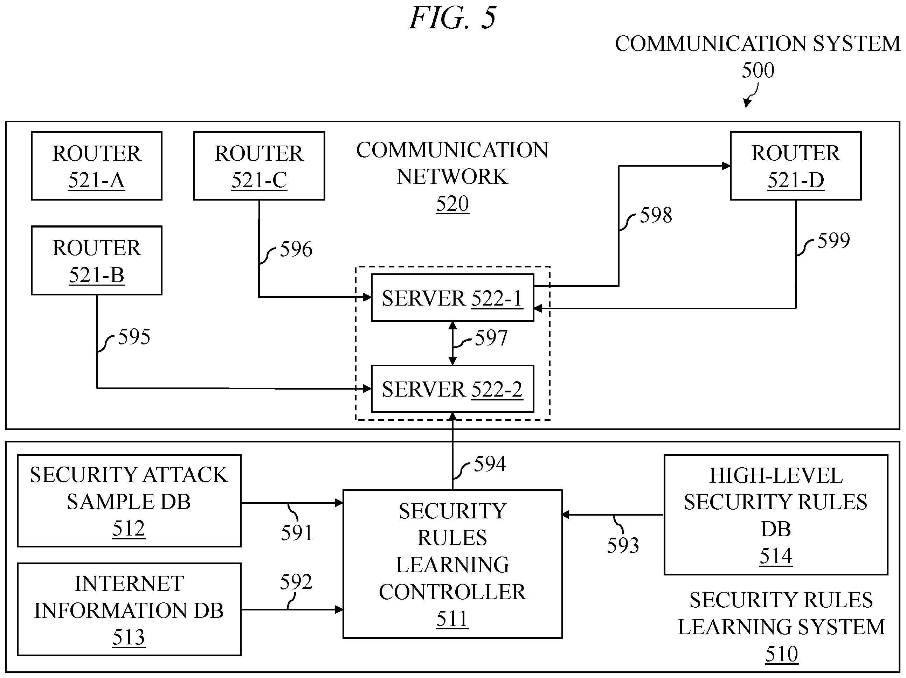

FIG. 5 depicts an example embodiment of a communication system configured to support programming of security functions into routers of a communication network.

As depicted in FIG. 5, communication system 500 includes a security rules learning system 510 and a communication network 520. The security rules learning system 510 includes a security rules learning controller 511, a security attack sample database 512, an Internet information database 513, and a high-level security rules database 514. The communication network 520 includes a set of routers 521 (illustratively, four routers 521-A, 521-B, 521-C, and 521-D, although it will be appreciated that few or more routers 521 may be present) and a set of servers 522 (illustratively, two servers 522-1 and 522-2, although it will be appreciated that fewer or more servers 522 may be supported). The security rules learning system 510 is configured to provide security rules which may be operated on by the servers 522 of the communication network 520, based on information obtained by the servers 522 from the routers 521, to program the routers 521 with router-specific security rules configured to protect the communication network 520. As depicted in FIG. 5, the communication system 500 supports a process for programming of security functions into the routers 521 of the communication network 520, as indicated by the sequence of steps 591 - 599.

At step 591, the security rules learning controller 511 receives security attack sample information from the security attack sample database 512. The security attack sample database 512 may receive continuous updates of real-world security attack samples (e.g., DDoS attack samples, botnet attack samples, or the like, as well as various combinations thereof) from various sources of such real-world security attack samples (e.g., network providers, service providers, cloud providers, regulators, national security organizations, security companies, security professionals, or the like, as well as various combinations thereof). The security attack samples are samples of security attacks which have occurred, and each security attack sample may include security attack information describing the security attack (e.g., attack type of the attack, date and time of the attack, location of the attack, one or more characteristics of the attack, resolution of the attack, or the like, as well as various combinations thereof). The security attack sample database 512 also or alternatively may include security attack sample information which may include security attack samples, information from security attack samples, information derived from analysis of security attack samples, or the like, as well as various combinations thereof. The security attack sample database 512 may correspond to the security genome 127 of the communication system 100 of FIG. 1.

At step 592, the security rules learning controller 511 receives Internet information from the Internet information database 513. The Internet information database 513 may receive continuous updates of Internet information from the Internet. The Internet information may include Internet topology information, Internet device information, Internet services information, or the like, as well as various combinations thereof. The Internet information database 513 may correspond to the cloud genome 126 of the communication system 100 of FIG. 1.

At step 593, the security rules learning controller 511 receives a set of high-level security rules from the high-level security rules database 514. The high-level security rules are generic security rules, not device-specific security rules. The high-level security rules may include security rules generated by human security engineers. The high-level security rules may specify security goals to be achieved, one or more parameters which may be used for detection of a security attack, one or more actions which may be initiated for mitigation of a security attack once detected, or the like, as well as various combinations thereof. The high-level security rules may be high-level security rules for various types of security attacks (e.g., DDoS attacks, botnet attacks, or the like, as well as various combinations thereof.

At step 594, the security rules learning controller 511 generates a set of security rules for the communication network 520 and provides the security rules to the set of servers 522 of the communication network 520. The security rules learning controller 511 may generate the set of security rules for the communication network 520 based on the high-level security rules, the Internet information, and the security attack sample information. The security rules learning controller 511 may generate the set of security rules for the communication network 520 by compiling the security rules for the communication network 520 from the high-level security rules based on analysis of the Internet information and the security attack sample information. The security rules learning controller 511, where the high-level security rules define parameters, may compile the security rules for the communication network 520 from the high-level security rules by determining configuration of the parameters based on the analysis of the Internet information and the security attack sample information. In this manner, the set of servers 522 receives the security rules from the security rules learning controller 511.

At step 595, the set of servers 522 receives router configuration information from the routers 521. The router configuration information for a router 521 may include an indication of the vendor of the router 521, an indication of the router model of the router 521, an indication of a set of capabilities supported by the router 521 (e.g., hardware capabilities, software capabilities (e.g., programming languages supported) or the like), an indication of a capacity of the router 521, an indication of status information associated with the router 521 (e.g., a router status of the router 521, one or more component statuses of one or more components of the router, or the like, as well as various combinations thereof), or the like, as well as various combinations thereof. It will be appreciated that, although the router configuration information is only depicted as being received from router 521-B, router configuration information may be received from any of the routers 521 in the communication network 520. It will be appreciated, although primarily presented with respect to example embodiments in which the router configuration information is received from the routers 521, at least a portion of the router configuration information of the routers 521 also or alternatively may be received from one or more other sources of such router configuration information (e.g., one or more management systems where the router configuration information is provided from the routers 521 to the one or more management systems).

At step 596, the set of servers 522 receives router telemetry data from the routers 521. The router telemetry data for a router 521 may include one or more of packet mirroring traffic from the router 521, IPFIX data from the router 521, SNMP traps from the router 521, gRPC data from the router 521, or the like, as well as various combinations thereof. It will be appreciated that, although the router telemetry data is only depicted as being received from router 521-C, router telemetry data may be received from any of the routers 521 in the communication network 520. It will be appreciated, although primarily presented with respect to example embodiments in which the router telemetry data is received from the routers 521, at least a portion of the router telemetry data of the routers 521 also or alternatively may be received from one or more other sources of such router telemetry data (e.g., one or more management systems where the router telemetry data is provided from the routers 521 to the one or more management systems).

At step 597, the set of servers 522 detects a security event in the communication network 520 based on the set of security rules received from the security rules learning controller 511. The security event may be detected based on parameters specified by the set of security rules. The security event may be any type of security event which may be detected based on the set of security rules (e.g., a DDoS attack event, a botnet attack event, or the like, as well as various combinations thereof).

At step 598, the set of servers 522 generates router-specific security rules for one or more of the routers 521 and provides the router-specific security rules to the one or more routers 521. The set of servers 522 may generate the router-specific security rules in response to detection of the security event in the communication network. It will be appreciated that the router-specific security rules may be generated for the routers 521 and provided to the routers 521 under various other conditions, such as periodically for the communication network 520 (e.g., to ensure that the routers 521 remain configured with the most relevant router-specific security rules), in response to one or more conditions detected in the communication network 520 (e.g., topology changes in the communication network 520, failures detected in the communication network 520, suspicious activity detected in the communication network 520, and so forth), or the like, as well as various combinations thereof).

The set of servers 522 may generate the router-specific security rules based on the set of security rules received from the security rules learning controller 511. The set of servers 522 may generate the router-specific security rules based on the router configuration information, the router telemetry data, or the like, as well as various combinations thereof. The set of servers 522 may generate the router-specific security rules based on modification of the set of security rules to form the router-specific security rules. The set of servers 522 may generate the router-specific security rules based on modification of the set of security rules, based on the router configuration information and/or the router telemetry data, to form the router-specific security rules. It will be appreciated that the router-specific security rules may be generated in various other ways.

The set of servers 522 may generate the router-specific security rules for one or more of the routers 521 of the communication network 520. The router-specific security rules may be generated for one or more of the routers 521 for which the security event was detected and/or one or more routers 521 not associated with the security event, for one or more of the routers 521 from which router configuration information was received and/or from one or more routers 521 for which router configuration information was not received, for one or more of the routers 521 from which router telemetry data was received and/or from one or more routers 521 for which router telemetry data was not received, or the like, as well as various combinations thereof. It will be appreciated that, although depicted with respect to generating router-specific security rules for router 521-D and providing the router-specific security rules to router 521-D, router-specific security rules may be generated for and provided to any of the routers 521 in the communication network 520.

The set of servers 522 may generate the router-specific security rules using one or more rule programming languages. The set of servers 522 may generate the router-specific security rules for a router 521 using one or more programming languages that compiles the security rules and outputs router-specific security rules usable by the router 521 as determined from the router configuration information for the router 521. For example, the router-specific security rules may be defined using one or more of NetConf, YANG, CLI, or the like, as well as various combinations thereof. It will be appreciated that the router-specific security rules may be specified using any other suitable rule specification languages which may be supported by the routers 521.

At step 599, the set of servers 522 uses feedback from the routers 521 to dynamically adjust various aspects of generation of the router-specific security rules for the routers 521. The set of servers 522 may use the feedback from the routers 521 to dynamically adjust one or more of the router-specific rules for the routers 521, to dynamically adjust processing logic used by the set of servers 522 for generating the router-specific security rules for the routers 521, or the like, as well as various combinations thereof. The feedback from the routers 521 may include various types of feedback which may be provided by the routers 521 and used by the set of servers 522 to evaluate the efficacy of the router-specific security rules previously provided to the routers 521. For example, the feedback information received from the routers 521 may include traffic information related to traffic being received at the routers 521 (e.g., packets or packet samples, packet flows or packet flow samples, or the like, as well as various combinations thereof), which may be evaluated by the set of servers 522 to determine the efficacy of the router-specific security rules previously provided to the routers 521 (e.g., based on a determination that there is still bad traffic being received at the routers 521 that needs to be dropped, one or more of the router-specific security rules for one or more of the routers 521 may be adjusted accordingly and provided to the routers 521 for use by the routers 521 to continue to mitigate the security event). For example, the feedback information received from the routers 521 may include operating parameters of the routers 521 associated with handling of traffic at the routers 521, which may be evaluated by the set of servers 522 to determine the efficacy of the router-specific security rules previously provided to the routers 521 (e.g., based on a determination that the operating parameters indicate an unexpected or unusual strain on the routers 521, one or more of the router-specific security rules for one or more of the routers 521 may be adjusted accordingly and provided to the routers 521 for use by the routers 521 to continue to mitigate the security event). It will be appreciated that various other types of feedback information may be received by the set of servers 522 from the routers 521 for use by the set of servers to dynamically adjust the router-specific security rules for the routers 521 to continue to address an existing security event, to better prepare for potential future security events, or the like, as well as various combinations thereof. It will be appreciated that, although the feedback information is only depicted as being received from router 521-D (since this is the router to which the router-specific security rules were provided), feedback information may be received from any of the routers 521 in the communication network 520. It will be appreciated, although primarily presented with respect to example embodiments in which the feedback information is received from the routers 521, at least a portion of the router configuration information of the routers 521 also or alternatively may be received from one or more other sources of such feedback information (e.g., one or more management systems where the feedback information is provided from the routers 521 to the one or more management systems).

It will be appreciated that programming of the routers 521 to provide security for the communication network 520, although primarily presented as being provided based on execution of a specific sequence of steps, may be provided based on execution of the steps in different orders, based on execution of fewer or more steps, or the like, as well as various combinations thereof.

It will be appreciated that the example embodiments of FIG. 5, although primarily presented with respect to programming a specific type of network device (namely, routers) to provide security for a communication network, may be adapted for use in programming various other types of network devices (e.g., switches, servers, firewalls, extended services appliances, or the like) to provide security for a communication network.

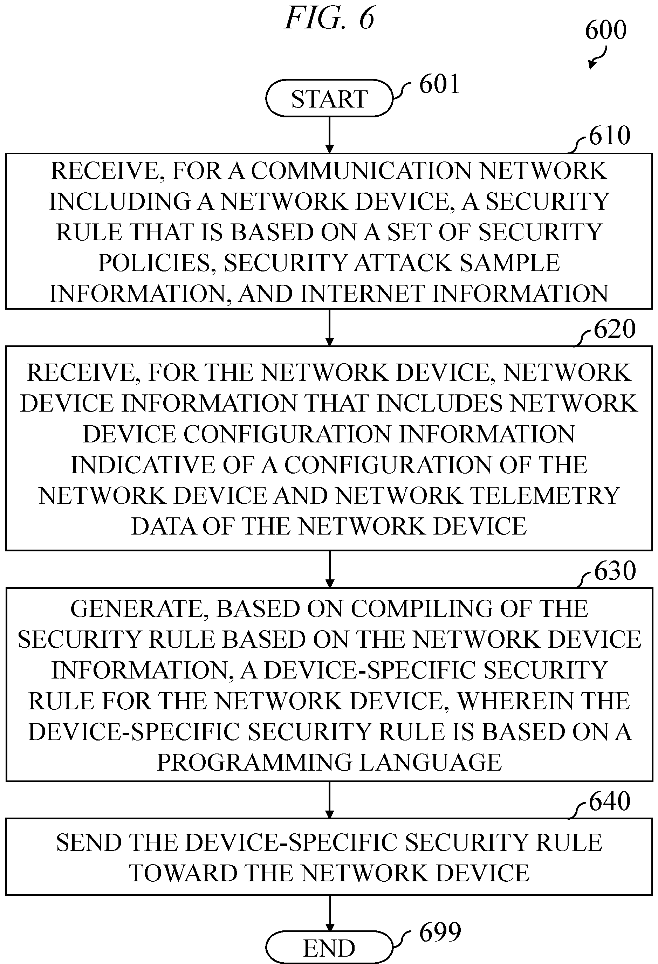

FIG. 6 depicts an example embodiment of a method for supporting programming of a security rule into a network device of a communication network. It will be appreciated that, although primarily presented herein as being performed serially, at least a portion of the functions of method 600 may be performed contemporaneously or in a different order than as presented in FIG. 6. At block 601, the method 600 begins. At block 610, receive, for a communication network including a network device, a security rule that is based on a set of security policies, security attack sample information, and Internet information. At block 620, receive, for the network device, network device information that includes network device configuration information indicative of a configuration of the network device and network telemetry data of the network device. At block 630, generate, based on compiling of the security rule based on the network device information, a device-specific security rule for the network device, wherein the device-specific security rule is based on a programming language. At block 640, send the device-specific security rule toward the network device. At block 699, the method 600 ends.

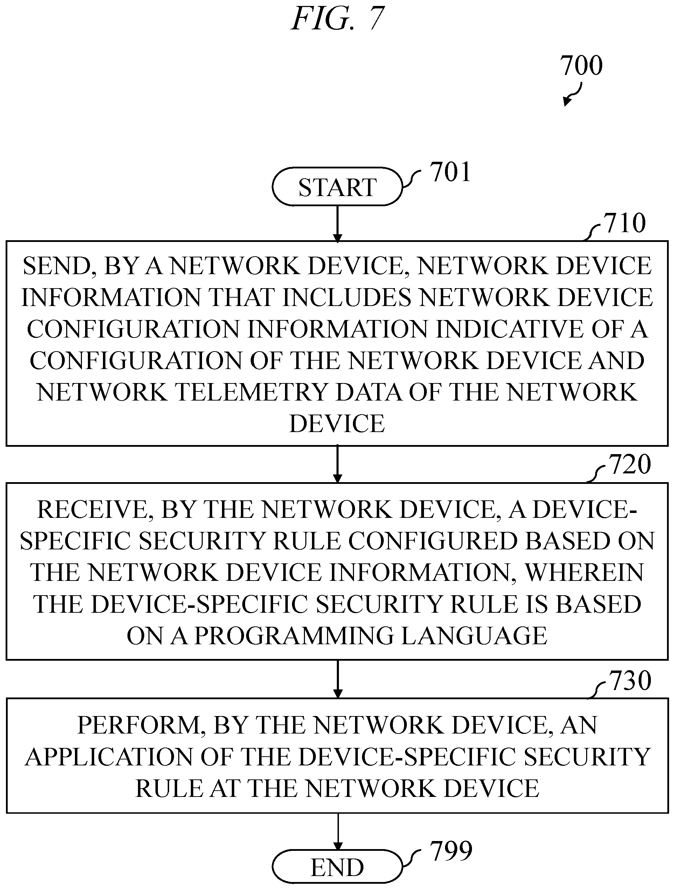

FIG. 7 depicts an example embodiment of a method for supporting programming of a security rule into a network device of a communication network. It will be appreciated that, although primarily presented herein as being performed serially, at least a portion of the functions of method 700 may be performed contemporaneously or in a different order than as presented in FIG. 7. At block 701, the method 700 begins. At block 710, send, by a network device, network device information that includes network device configuration information indicative of a configuration of the network device and network telemetry data of the network device. At block 720, receive, by the network device, a device-specific security rule configured based on the network device information, wherein the device-specific security rule is based on a programming language. At block 730, perform, by the network device, an application of the device-specific security rule at the network device. At block 799, the method 700 ends.

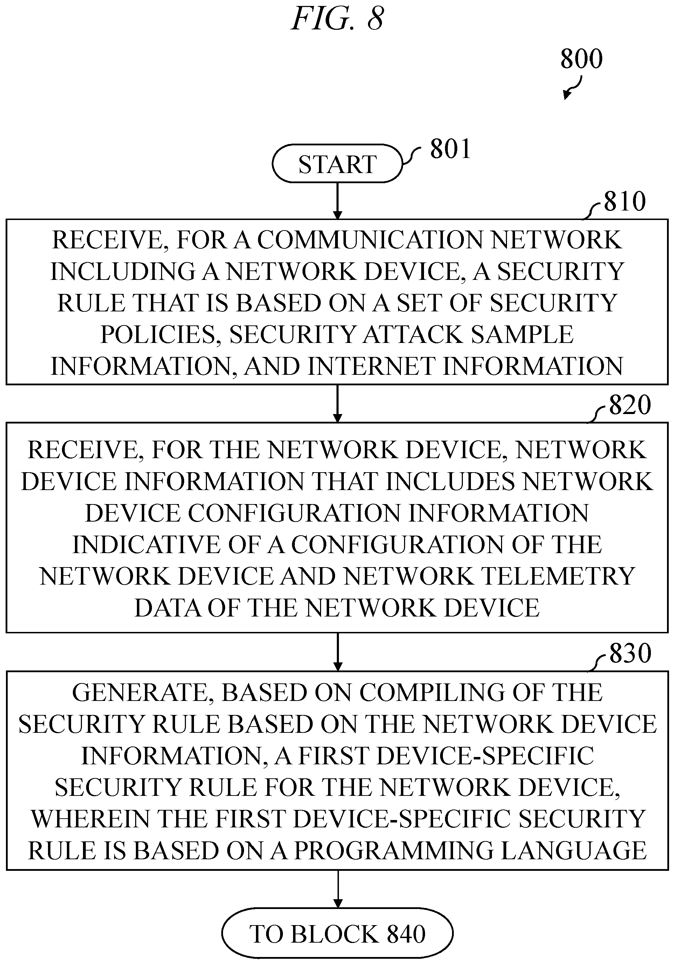

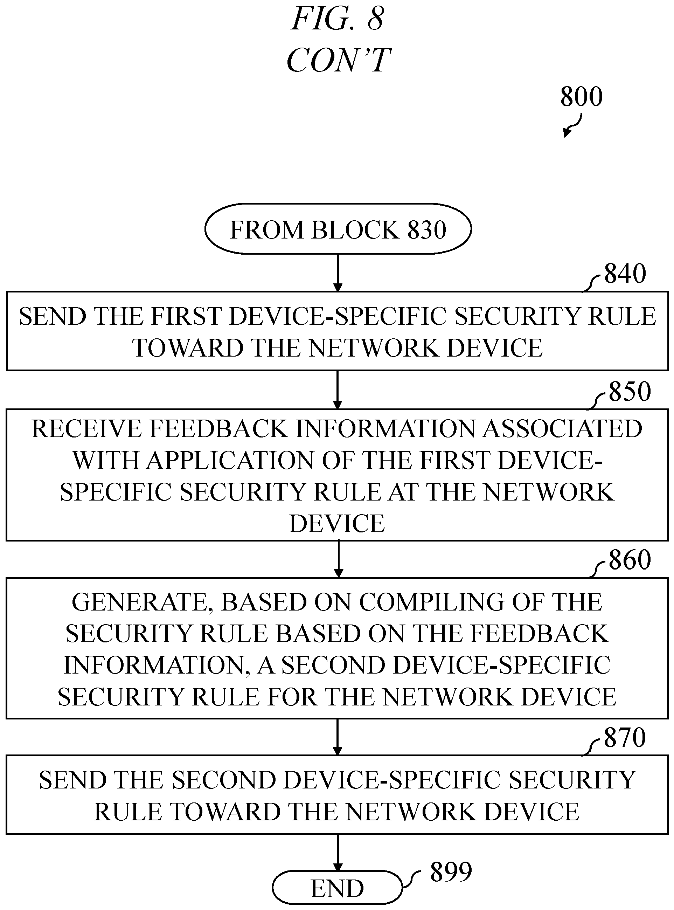

FIG. 8 depicts an example embodiment of a method for supporting programming of a security rule into a network device of a communication network. It will be appreciated that, although primarily presented herein as being performed serially, at least a portion of the functions of method 800 may be performed contemporaneously or in a different order than as presented in FIG. 8. At block 801, the method 800 begins. At block 810, receive, for a communication network including a network device, a security rule that is based on a set of security policies, security attack sample information, and Internet information. At block 820, receive, for the network device, network device information that includes network device configuration information indicative of a configuration of the network device and network telemetry data of the network device. At block 830, generate, based on compiling of the security rule based on the network device information, a first device-specific security rule for the network device, wherein the first device-specific security rule is based on a programming language. At block 840, send the first device-specific security rule toward the network device. At block 850, receive feedback information associated with application of the first device-specific security rule at the network device. At block 860, generate, based on compiling of the security rule based on the feedback information, a second device-specific security rule for the network device. At block 870, send the second device-specific security rule toward the network device. At block 899, the method 800 ends.

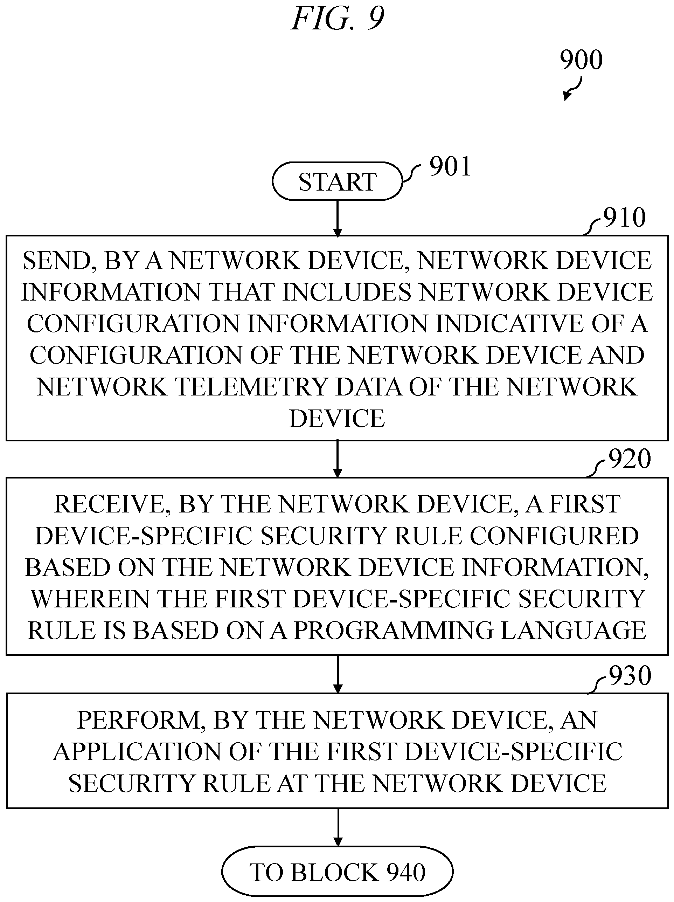

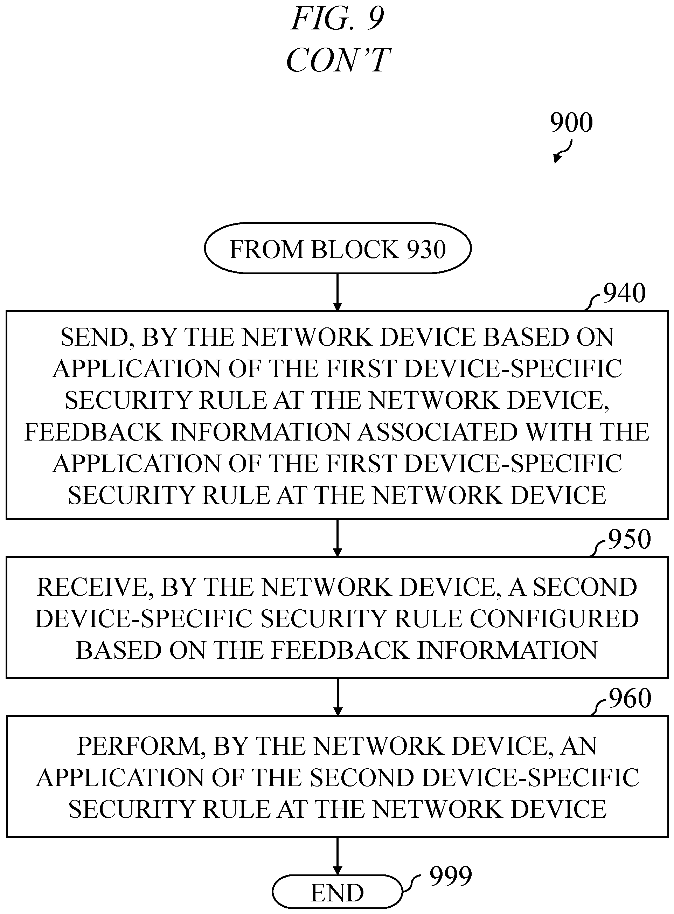

FIG. 9 depicts an example embodiment of a method for supporting programming of a security rule into a network device of a communication network. It will be appreciated that, although primarily presented herein as being performed serially, at least a portion of the functions of method 900 may be performed contemporaneously or in a different order than as presented in FIG. 7. At block 901, the method 900 begins. At block 910, send, by a network device, network device information that includes network device configuration information indicative of a configuration of the network device and network telemetry data of the network device. At block 920, receive, by the network device, a first device-specific security rule configured based on the network device information, wherein the first device-specific security rule is based on a programming language. At block 930, perform, by the network device, an application of the first device-specific security rule at the network device. At block 940, send, by the network device based on application of the first device-specific security rule at the network device, feedback information associated with the application of the first device-specific security rule at the network device. At block 950, receive, by the network device, a second device-specific security rule configured based on the feedback information. At block 960, perform, by the network device, an application of the second device-specific security rule at the network device. At block 999, the method 900 ends.

Various example embodiments for supporting network security may provide various advantages or potential advantages.

For example, various example embodiments for supporting network security may be configured to provide a dynamic, robust, scalable, and cost-effective network security solution based on programming of security functions into network devices.

For example, various example embodiments for supporting network security may be configured to program security functions into network devices based on programming of security functions into network devices based on use of automation and compilation, including configuration-specific (e.g. capability-specific, such as hardware-specific capabilities) decisions at runtime.

For example, various example embodiments for supporting network security may be configured to program security functions into network devices in a network that includes a heterogeneous mix of network devices (e.g., a mix of network devices with various vendors, models, capabilities, configuration options, or the like, as well as various combinations thereof).

For example, various example embodiments for supporting network security may be configured to program security functions into network devices in a network that changes dynamically, such as where the network provider may change the mix of network devices on a regular basis, thereby enabling security to evolve dynamically with the network (as opposed to where dedicated security appliances are deployed and remain consistent until the appliances are upgraded or replaced).

For example, various example embodiments for supporting network security may be configured to program security functions into network devices even where the security functions on the network devices share various resources with a dynamic set of forwarding and policy functions.

For example, various example embodiments for supporting network security may be configured to program security functions into network devices in a manner that obviates a need for security traffic inspection functions (e.g., DPI or other traffic inspection functions) and policy enforcement functions to be co-located within the same device and, thus, that enables the security traffic inspection functions and policy enforcement functions to be separated and decomposed.

For example, various example embodiments for supporting network security may be configured to program security functions, including complex security functions, into network devices in a manner that may obviate the need for use of specialized hardware on the network devices (e.g., custom FPGA / DPU hardware) in order to support more complex security functions for the network devices (although it will be appreciated that, in at least some cases, such specialized hardware still may be deployed to provide security for communication networks).

For example, various example embodiments for supporting network security may be configured to program security functions into network devices in a manner that enables the network devices to replace various custom security appliances that would otherwise need to be deployed within the network to support certain types of (generally more complex) security functions (e.g., security functions providing performant protections against DDoS, botnets, and so forth) within the network (although it will be appreciated that in at least some cases, such customer security appliances still may be deployed to provide security for communication networks).

For example, various example embodiments for supporting network security may be configured to program security functions into network devices in a manner than obviates a need to rely on relatively expensive network security functions (e.g., probes, deep packet inspection (DPI), FPGA / DPU based security appliances, and so forth) to support network security (although it will be appreciated that at least some such network security functions also may be applied to provide security for communication networks).

For example, various example embodiments for supporting network security may be configured to program security functions into network devices in a manner that achieves security performance (e.g., based on false positive rate, false negative rate, latency, and other metrics) that is equal to or even better than traditional FPGA / DPU based security appliances, thereby obviating the need for deployment of custom-built FPGA / DPU security appliances (although it will be appreciated that at least some such custom-built FPGA / DPU security appliances also may be used for various reasons).

It will be appreciated that various example embodiments for supporting network security may provide various other advantages or potential advantages.

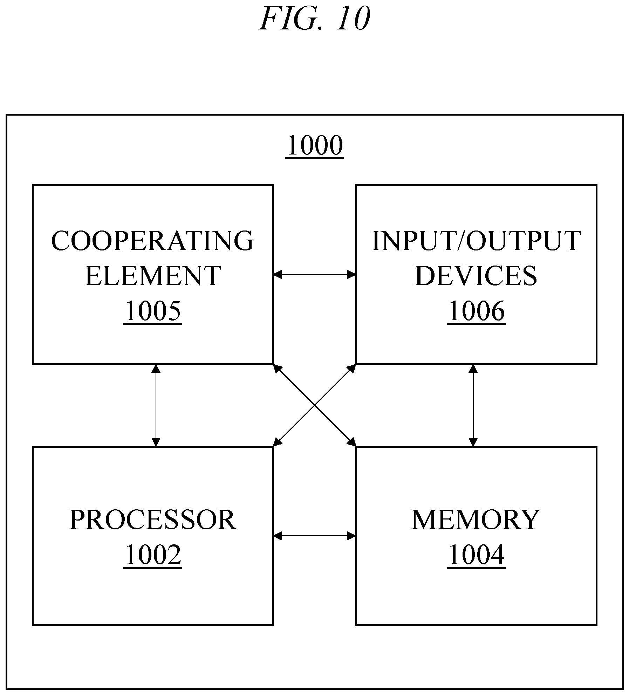

FIG. 10 depicts an example embodiment of a computer suitable for use in performing various functions presented herein.

The computer 1000 includes a processor 1002 (e.g., a central processing unit (CPU), a processor, a processor core of a processor, a subset of processor cores of a processor, a set of processor cores of a processor, or the like) and a memory 1004 (e.g., a random access memory (RAM), a read-only memory (ROM), or the like). In at least some example embodiments, the computer 1000 may include at least one processor and at least one memory storing instructions that, when executed by the at least one processor, cause the computer 1000 to perform various functions presented herein.

The computer 1000 also may include a cooperating element 1005. The cooperating element 1005 may be a hardware device. The cooperating element 1005 may be a process that can be loaded into the memory 1004 and executed by the processor 1002 to implement various functions presented herein (in which case, for example, the cooperating element 1005 (including associated data structures) can be stored on a non-transitory computer readable medium, such as a storage device or other suitable type of storage element (e.g., a magnetic drive, an optical drive, or the like)). The cooperating element 1005 may be a security compiler configured to compile secure rules in accordance with various example embodiments presented herein.

The computer 1000 also may include one or more input/output devices 1006. The input/output devices 1006 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 1000 may represent a general architecture and functionality suitable for implementing functional elements described herein, portions of functional elements described herein, or the like, as well as various combinations thereof. For example, computer 1000 may provide a general architecture and functionality that is suitable for implementing one or more elements presented herein.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are joined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").
It will be appreciated that, although various embodiments which incorporate the teachings presented herein have been shown and described in detail herein, those skilled in the art can readily devise many other varied embodiments that still incorporate these teachings.

## Claims

1. An apparatus comprising means for:
receiving, for a communication network including a network device, a security rule that is based on a set of security policies, security attack sample information, and Internet information;
receiving, for the network device, network device information that includes network device configuration information indicative of a configuration of the network device and network telemetry data of the network device;
generating, based on compiling of the security rule based on the network device information, a device-specific security rule for the network device, wherein the device-specific security rule is based on a programming language; and
sending the device-specific security rule toward the network device.

2. The apparatus according to claim 1, wherein the security rule is related to at least one of a distributed denial-of-service (DDoS) attack or a botnet attack.

3. The apparatus according to any of claims 1 to 2, wherein the security attack sample information includes at least one of a set of security attack samples or security attack sample analysis information output based on analysis of one or more security attack samples.

4. The apparatus according to any of claims 1 to 3, wherein at least one of:
the security attack sample information is based on at least one actual distributed denial-of-service (DDoS) attack sample; or
the Internet information includes at least one of device information, topology information, or service information.

5. The apparatus according to any of claims 1 to 4, wherein the apparatus further comprises means for:
receiving the set of security policies, the security attack sample information, and the Internet information; and
generating the security rule based on the set of security policies, the security attack sample information, and the Internet information.

6. The apparatus according to any of claims 1 to 5, wherein the network device configuration information includes at least one of an indication of a vendor of the network device, an indication of at least one capability of the network device, an indication of a capacity of the network device, or an indication of at least one device-specific format supported by the network device.

7. The apparatus according to any of claims 1 to 6, wherein the network telemetry data of the network device includes packet information for a set of traffic flows handled at the network device.

8. The apparatus according to any of claims 1 to 7, wherein, for generating the device-specific security rule, the apparatus further comprises means for:
solving a constraint satisfaction problem that includes a set of inputs, wherein the set of inputs includes at least one of the set of security policies, the network device information, a security goal associated with the security rule, or a configuration limit.

9. The apparatus according to any of claims 1 to 8, wherein, for generating the device-specific security rule, the apparatus further comprises means for:
compiling the security rule taking into account at least a portion of the network device information.

10. The apparatus according to any of claims 1 to 9, wherein the network device configuration information includes a hardware capability of the network device, wherein the device-specific security rule is generated based on the hardware capability of the network device.

11. The apparatus according to any of claims 1 to 10, wherein at least one of:
the device-specific security rule is generated in a manner tending to minimize resource consumption at the network device;
the device-specific security rule is specified in a format supported by the network device as indicated in the network device configuration information; or
the device-specific security rule is related to at least one of a distributed denial-of-service (DDoS) attack or a botnet attack.

12. The apparatus according to any of claims 1 to 11, wherein the feedback information includes network telemetry data of the network device for a set of traffic flows handled at the network device.

13. The apparatus according to any of claims 1 to 12, wherein the apparatus further comprises means for:
receiving feedback information associated with application of the device-specific security rule at the network device;
generating, based on compiling of the security rule based on the feedback information, a second device-specific security rule for the network device; and
sending the second device-specific security rule toward the network device.

14. A method, comprising:
receiving, for a communication network including a network device, a security rule that is based on a set of security policies, security attack sample information, and Internet information;
receiving, for the network device, network device information that includes network device configuration information indicative of a configuration of the network device and network telemetry data of the network device;
generating, based on compiling of the security rule based on the network device information, a device-specific security rule for the network device, wherein the device-specific security rule is based on a programming language; and
sending the device-specific security rule toward the network device.

15. An apparatus comprising means for:
sending, by a network device, network device information that includes network device configuration information indicative of a configuration of the network device and network telemetry data of the network device;
receiving, by the network device, a first device-specific security rule configured based on the network device information, wherein the first device-specific security rule is based on a programming language;
performing, by the network device, an application of the first device-specific security rule at the network device;
sending, by the network device based on the application of the first device-specific security rule at the network device, feedback information associated with the application of the first device-specific security rule at the network device;
receiving, by the network device, a second device-specific security rule configured based on the feedback information; and
performing, by the network device, an application of the second device-specific security rule at the network device.
